# EUROPÄISCHE PATENTSCHRIFT

(11) **EP 0 945 236 B1**
(45) Veröffentlichungstag und Bekanntmachung des Hinweises auf die Patenterteilung: **06.07.2005**
(21) Anmeldenummer: 98123952.8
(22) Anmeldetag: 17.12.1998
(51) Int. Cl.: B27M 3/06, B65G 57/22

(54) **Anlage zur Fertigung von Oberlagen für Mehrschichten-Parkettdielen**
Apparatus for producing a top layer for laminated parquet flooring
Dispositif permettant de realiser la couche supérieure de parquets finis laminés

(30) Priorität: 25.03.1998 DE 19813132
(43) Veröffentlichungstag der Anmeldung: 29.09.1999
(73) Patentinhaber: Robert Bürkle GmbH, 72250 Freudenstadt (DE)
(72) Erfinder: Dörhöfer, Heinrich, 47977 Willich (DE); Ebeling, Lutz, 33397 Rietberg (DE); Englisch, Hans-Joachim, 59556 Lippstadt (DE); Klatte, Horst, 59519 Möhnesee (DE); Lücking, Thomas, 33142 Büren-Steinhausen (DE); Mansuroglu, Mehmet Ali, 59329 Wadersloh (DE); Tölle, Heribert, 33102 Paderborn (DE)
(74) Vertreter: Albrecht, Rainer Harald, Dr.-Ing.

(56) Entgegenhaltungen:
- EP-A- 0 496 341
- DE-A- 19 529 040
- DE-C- 4 421 786

## Beschreibung

Die Erfindung betrifft eine Anlage zur Fertigung von Oberlagen für Mehrschichten-Parkettdielen mit
Lamellenmagazinen, die jeweils einen Stapel aus Lamellen aufnehmen,
einer Legestrecke, die mindestens zwei an die Lamellenmagazine anschließende parallele Bahnen aufweist,
einer an die Legestrecke anschließenden Staustrecke mit endseitigem Anschlag,
einer Leimauftragseinrichtung für die Beleimung der Längskanten der auf den Bahnen abgelegten Lamellen,
einer Säge, die quer zu den Bahnen verfahrbar ist und in einem durch die Länge der zu fertigenden Oberlagen vorgegebenen Abstand vor dem Anschlag angeordnet ist,
einer beheizbaren Presse und
Einrichtungen für die Querverdichtung der aus parallelen Lamellensträngen bestehenden Lamellenanordnung, für die Zuführung der Lamellenanordnung zur Presse und für den Abtransport der fertigverpreßten Oberlagen.

Eine Anlage des beschriebenen Aufbaus ist aus DE-C-44 21 786 bekannt (siehe auch DE 88 06 883 U1). Die Lamellen sind nach Qualität und Groblängen sortiert in den Lamellenmagazinen bevorratet. Bei der Erstellung des Legebildes auf der Legestrecke sind manuelle Eingriffe erforderlich. Füllstücke und Ausgleichslamellen, deren Länge sich von der üblichen Lamellenlänge unterscheidet, werden von Bedienungspersonal in die auf der Legestrecke abgelegten Lamellenstränge eingesetzt. Das Einlegen von Ausgleichslamellen ist erforderlich, damit bei der gebildeten Lamellenanordnung ein vorgegebener Kreuzfugenabstand eingehalten wird. Kreuzfugenabstand meint den Abstand zwischen stirnseitigen Stößen benachbarter Lamellenstränge. Mit dem Einlegen von Füllstücken bzw. Ausgleichslamellen werden ferner Lamellenstücke verarbeitet, die eingekürzt wurden, weil Astlöcher und ähnliche Fehlstellen entfernt werden mußten. Bis etwa 10% Ausgleichslamellen bzw. Füllstücken werden in einer Lamellenanordnung, z.B. im Zuge der Herstellung von Schiffsbodenparkett, verarbeitet. Das manuelle Erstellen der Legebilder auf der Legestrecke erfordert geschultes Personal. Bei den Legebildern können durch die manuellen Eingriffe Qualitätsschwankungen auftreten.

Der Erfindung liegt die Aufgabe zugrunde, eine Anlage für die automatische Fertigung von Oberlagen einschließlich einer automatischen Erstellung der Legebilder anzugeben.

Die Aufgabe wird bei einer Anlage des eingangs beschriebenen Aufbaus erfindungsgemäß dadurch gelöst,
daß entlang der Legestrecke eine Vorrichtung zur Fehllängenkorrektur angeordnet ist, die Zusatzmagazine für Ausgleichslamellen mit in einer Abstufung vorgegebenen unterschiedlichen Lamellenlängen und eine Transfereinrichtung aufweist, wobei die Transfereinrichtung an alle Zusatzmagazine angeschlossen ist, rechnergesteuert Ausgleichslamellen aus den Zusatzmagazinen entnimmt sowie einer durch den Rechner vorgegebenen Bahn der Legestrecke zuführt, und
daß ein Rechner mit Daten über die Längen der in den Lamellenmagazinen gestapelten Lamellen und mit den vorgegebenen Längen der Ausgleichslamellen ein Legebild erstellt und die Lamellenentnahme aus den Lamellenmagazinen sowie die Vorrichtung zur Fehllängenkorrektur so steuert, daß die auf der Legestrecke erzeugte Lamellenanordnung dem Legebild entspricht.

Gemäß einer bevorzugten Ausführung der Erfindung weisen die Lamellenmagazine an einen Rechner angeschlossene Längenmeßeinrichtungen auf, welche die Lamellenlängen der im Stapel angeordneten Lamellen messen. Die Längenmeßwerte werden dem Rechner zugeführt. Die an den Lamellenmagazinen angeordneten Längenmeßeinrichtungen können einen Meßkopf aufweisen, der sich in Stapelrichtung über einen Abschnitt des Lamellenmagazines erstreckt und die Längen einer großen Zahl von Lamellen, vorzugsweise die Längen aller in einem Strang für das Legebild benötigten Lamellen mißt. Der Meßkopf ist so eingerichtet, daß immer mindestens 20 Lamellen übereinander in ihrer Länge erkannt werden. Der Rechner kann somit im Vorfeld das Legebild aus diesen Werten bestimmen, ohne daß die Lamellen schon auf der Legestrecke abgelegt sind. Vorgabegrößen bei der Erstellung des Legebildes sind die Anzahl der für die zu fertigende Oberlage benötigten Lamellen aus den Lamellenmagazinen sowie die exakt vermessenen Längen der für die Lamellenanordnung zur Verfügung stehenden Lamellen. Zweckmäßig folgt die Längenmessung der Lamellen mit einer Meßgenauigkeit von plus/minus 1 mm. Der durch den Anschlag definierte Anfang der Lamellenanordnung liegt fest, und durch die Position der Säge ist das Ende der Oberlage definiert. Ferner wird ein Parameterbereich für den einzuhaltenden Kreuzfugenabstand festgelegt. Kreuzfugenabstand bezeichnet den Abstand zwischen den Lamellenstößen benachbarter Stränge. Schließlich werden Mindestlängen für die Endstücke definiert. Mit den beschriebenen Vorgabewerten und Meßgrößen legt das Rechenprogramm fest, an welchen Stellen Ausgleichslamellen in die Stränge einzufügen sind und mit welchen Länge. Die soft- und hardwaremäßige Umsetzung ist mit den modernen Mitteln der Technik ohne Schwierigkeiten möglich.

Die Oberlagen werden nacheinander gefertigt, wobei die durch die Säge abgetrennten Reststücke der Stränge mit den Lamellen der nachfolgenden Stränge gegen den Anschlag bewegt werden und den Anfang der nächstfolgenden Oberlage bilden. Auch bei exakter Vermessung der einzelnen Lamellen können sich im Laufe der Zeit an sich kleine Meßfehler zu signifikanten, die Qualität der gefertigten Oberlagen vermindernde Fehler addieren. Um zu vermeiden, daß sich im Zuge der Fertigung qualitätsmindernde Abweichungen zwischen der tatsächlichen Lamellenanordnung und dem Legebild einstellen, lehrt die Erfindung in weiterer Ausgestaltung, daß an dem in Transportrichtung rückwärtigen Ende der Staustrecke eine Stranglängenmeßeinrichtung zur Längenkontrolle der Lamellenstränge angeordnet ist, wobei die Stranglängenmeßeinrichtung an den Rechner angeschlossen ist und wobei mit den Meßwerten der Stranglängenmeßeinrichtung das Rechenprogramm für die Berechnung nachfolgender Legebilder kalibriert wird.

Für die konstruktive Ausführung der Lamellenmagazine bieten sich zahlreiche Möglichkeiten an. Zweckmäßig ist eine Ausführung, bei der die Lamellenmagazine einen vertikalen Magazinschacht, einen unterseitigen Ausschieber sowie eine den Stapel oberseitig beaufschlagende Druckeinrichtung aufweisen. Die Lamellenmagazine können ferner als Hubtische ausgeführt sein und einen oberseitigen Ausschieber aufweisen. Des weiteren besteht die Möglichkeit, daß die Lamellenmagazine einen Schacht sowie einen Sauggreifer zur Entnahme der Lamellen aufweisen. Im Rahmen der Erfindung liegt es schließlich, daß die Lamellenmagazine einen horizontalen Aufnahmeschacht, einen endseitigen Ausschieber sowie eine den Stapel beaufschlagende Druckeinrichtung aufweisen, wobei das Lamellenmagazin einen Stapel aus hochkant nebeneinander angeordneten Lamellen enthält.

Auch für die Ausgestaltung der Vorrichtung für die Fehllängenkorrektur bieten sich zahlreiche konstruktive Ausführungen an. Einige bevorzugte Ausführungen werden im folgenden erläutert.

Gemäß einer ersten Ausführung ist die Vorrichtung für die Fehllängenkorrektur in Transportrichtung vor den Lamellenmagazinen am Anfang der Legestrecke angeordnet und weist einen NC-gesteuerten Drehteller sowie eine zwischen dem Drehteller und der Legestrecke angeordnete Weiche auf. Die Zusatzmagazine sind auf dem Drehteller angeordnet und durch eine Bewegung des Drehtellers in eine an die Weiche anschließende Abgabestation bewegbar. Auf die Weiche übergebene Ausgleichslamellen sind durch Weichensteuerung den durch den Rechner vorgegebenen Bahnen zuführbar.

Gemäß einer zweiten Ausführung der Erfindung weist die Vorrichtung für die Fehllängenkorrektur eine an einem Portal verfahrbare Saughebeeinrichtung auf, welche Ausgleichslamellen rechnergesteuert aus den im Fahrbereich der Saughebeeinrichtung angeordneten Zusatzmagazinen aufnimmt und auf die durch den Rechner vorgegebenen Bahnen der Legestrecke ablegt. Der Vorrichtung für die Fehllängenkorrektur kann ferner eine Aufgabestation für die Beschickung der Zusatzmagazine mit Ausgleichslamellen zugeordnet sein. Bei dieser Ausführung weist die Aufgabestation eine Längenmeßeinrichtung für die aufgegebenen Ausgleichslamellen auf und ist im Fahrbereich der Saughebeeinrichtung angeordnet. Die in der Aufgabestation aufgegebenen Ausgleichslamellen werden dann rechnergesteuert nach Maßgabe des Längenmeßwertes mittels der Saughebeeinrichtung den Zusatzmagazinen zugeführt. Die Aufgabestation und die alle auf einer Seite der Legestrecke positionierten Lamellenmagazine bilden einen Arbeitsplatz, die mit einer einzigen Person besetzt werden kann.

Im Rahmen der Erfindung liegt es schließlich, daß die Vorrichtung für die Fehllängenkorrektur als mehrachsiger Industrieroboter ausgeführt ist, welcher Ausgleichslamellen aus den Zusatzmagazinen aufnimmt, die neben der Legestrecke angeordnet sind, und auf den durch den Rechner vorgegebenen Bahnen der Legestrecke ablegt. Die Zusatzmagazine können als drehbar angeordnete Doppelausgleichsmagazine ausgebildet sein. Doppelausgleichsmagazine bezeichnet eine Anordnung bestehend aus zwei an einen Drehtisch angeordneten, identischen Magazinsätzen mit jeweils mehreren Zusatzmagazinen. Die Magazinsätze sind wechselweise in den Arbeitsbereich des Industrieroboters und in einen außerhalb des Arbeitsbereiches liegenden Bereich für die Beschickung der Zusatzmagazine bewegbar.

Schließlich liegt es im Rahmen der Erfindung, daß der Vorrichtung für die Fehllängenkorrektur, wie immer sie auch ausgebildet ist, eine an den Rechner angeschlossene Meßeinrichtung für die Längenmessung der aus den Zusatzmagazinen entnommenen Ausgleichslamellen zugeordnet ist.

Im folgenden wird die Erfindung anhand einer lediglich ein Ausführungsbeispiel darstellenden Zeichnung ausführlicher erläutert. Es zeigen in schematischer Darstellung
- Fig. 1: eine Anlage zur Fertigung von Oberlagen für Mehrschichten-Parkettdielen in der Draufsicht,
- Fig. 2: ein zu der in Fig. 1 dargestellten Anlage gehörendes Lamellenmagazin im Schnitt,
- Fig. 3: die Lamellenanordnung einer mit der in Fig. 1 dargestellten Anlage hergestellten Oberlage,
- Fig. 4 und 5: weitere Ausführungen der erfindungsgemäßen Anlage,
- Fig. 6 bis 8: weitere konstruktive Ausführungen von Lamellenmagazinen.

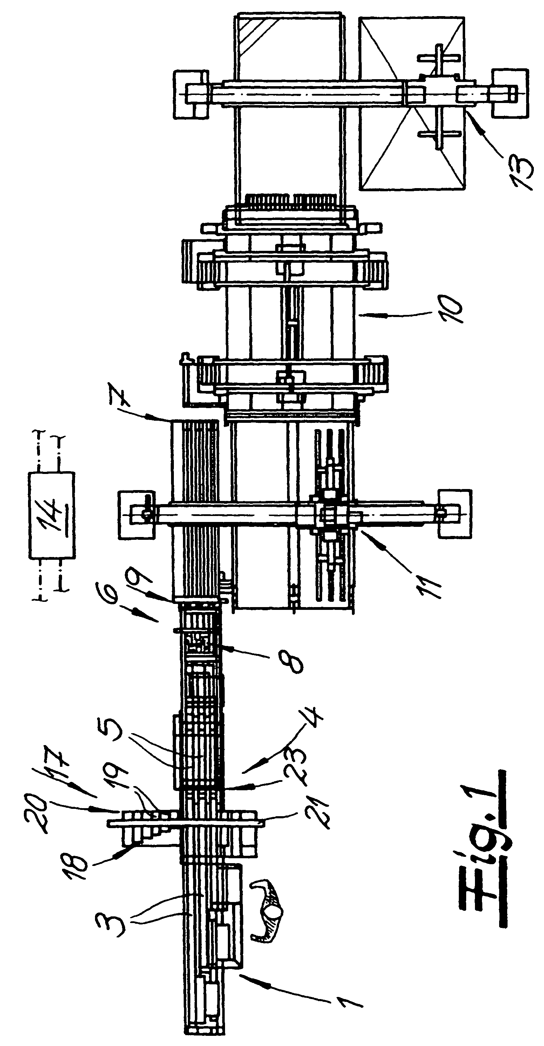

Zum grundsätzlichen Aufbau der in Fig. 1 dargestellten Anlage gehören Lamellenmagazine 1, die jeweils einen Stapel 2 aus Lamellen 3 aufnehmen, eine Legestrecke 4 mit mehreren an die Lamellenmagazine 1 anschließenden parallelen Bahnen 5, eine an die Legestrecke 4 anschließende Staustrecke 6 mit endseitigen Anschlag 7, eine Leimauftragseinrichtung 8 für die Beleimung der Längskanten der auf den Bahnen 5 abgelegten Lamellen 3, eine Säge 9, eine beheizbare Presse 10 sowie Einrichtungen 11 für die Querverdichtung der aus parallelen Lamellensträngen bestehende Lamellenanordnung 12 und für die Zuführung der Lamellenanordnung 12 zur Presse 10 und einer Einrichtung 13 für den Abtransport der verpreßten Oberlagen. Die Säge 9 ist in einem durch die Länge der zu fertigenden Oberlagen vorgegebenen Abstand vor dem Anschlag 7 angeordnet und quer zu den Bahnen 5 verfahrbar.

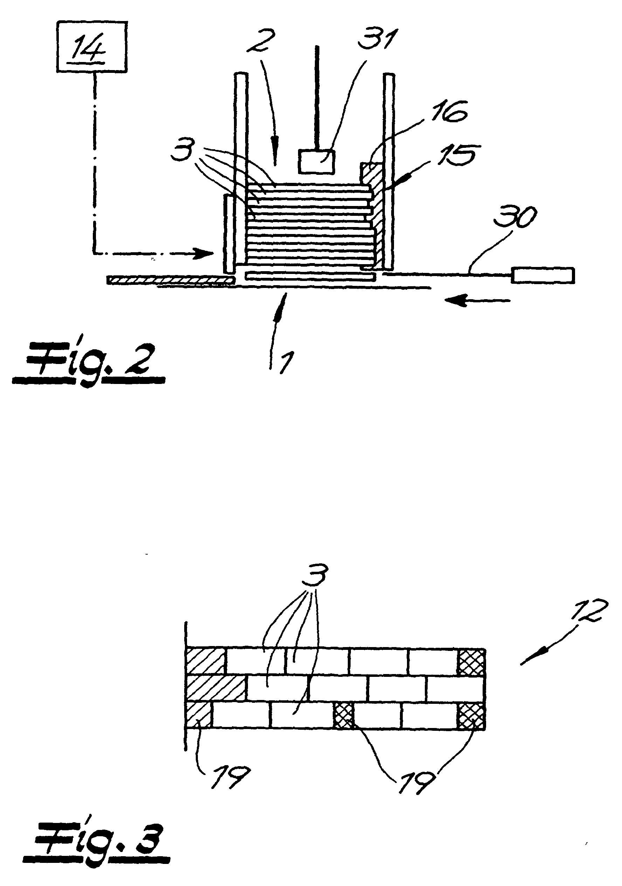

Einer vergleichenden Betrachtung der Fig. 1 und 2 entnimmt man, daß die Lamellenmagazine 1 an einen Rechner 14 angeschlossene Längenmeßeinrichtungen 15 aufweisen, welche die Lamellenlängen der im Stapel angeordneten Lamellen 3 messen. Die Längenmeßeinrichtungen 15 weisen zu diesem Zweck einen Meßkopf 16 auf, der sich in Stapelrichtung über einen Abschnitt des Lamellenmagazins 1 erstreckt und dessen Meßbereich in Fig. 2 durch Schraffur dargestellt ist. Die Lamellenlängen weisen Unterschiede von einigen Millimetern auf. An einem Ende sind die Lamellen 3 parallel zueinander ausgerichtet. Die gegenüberliegenden Lamellenenden fallen in den Meßbereich des Meßkopfes 16. In Fig. 2 ist schematisch angedeutet, daß der Meßkopf 16 die Längen einer großen Zahl von Lamellen 3 mißt. Bei der praktischen Ausführung erfaßt der Meßkopf 16 die einzelne Länge von mindestens 20 übereinanderliegenden Lamellen 3.

Der Fig. 1 entnimmt man, daß entlang der Legestrecke 4 eine Vorrichtung 17 zur Fehllängenkorrektur angeordnet ist, die Zusatzmagazine 18 für Ausgleichslamellen 19 aufweist. Die Ausgleichslamellen 19 besitzen unterschiedliche, in einer Abstufung vorgegebenen Lamellenlängen. Zu der Vorrichtung 17 zur Fehllängenkorrektur gehört auch eine Transfereinrichtung 20, die an alle Zusatzmagazine 18 angeschlossen ist und rechnergesteuert Ausgleichslamellen 19 aus den Zusatzmagazinen 18 entnimmt sowie einer durch den Rechner 14 vorgegebenen Bahn 5 der Legestrecke 4 zuführt.

Bei der in Fig. 1 dargestellten Ausführung besteht die Vorrichtung 17 zur Fehllängenkorrektur aus einer an einem Portal 21 verfahrbaren Saughebeeinrichtung 22, welche die Ausgleichslamellen 19 aus den im Fahrbereich der Saughebeeinrichtung 22 angeordneten Zusatzmagazinen 18 aufnimmt und auf die durch den Rechner 14 vorgegebenen Bahnen 5 der Legestrecke 4 ablegt. Auch andere Ausführungen der Transfervorrichtung 20, die nachfolgend noch im einzelnen erläutert werden, sind einsetzbar.

Mit den Längenmeßwerten der den Lamellenmagazinen 1 zugeordneten Längenmeßeinrichtungen 15 und mit den vorgegebenen Längen der Ausgleichslamellen 19 erstellt der Rechner 14 ein Legebild und steuert die Lamellenentnahme aus den Lamellenmagazinen 1 sowie die Vorrichtung 17 zur Fehllängenkorrektur so, daß die auf der Legestrecke 4 erzeugte Lamellenanordnung 12 dem Legebild entspricht. Die Fig. 3 zeigt eine solche nach einem von dem Rechner 14 vorgegebenen Legebild erzeugte Lamellenanordnung 12. Sie besteht aus Lamellen 3, die aus den Lamellenmagazinen 1 entnommen wurden, und aus Ausgleichslamellen 19, die zum Zwecke der Fehllängenkorrektur sowie als anfangs- und endseitige Füllstücke eingesetzt sind. Die Anordnung ist so getroffen, daß die endseitigen Stücke eine Mindestlänge von 100 mm aufweisen und auch der Kreuzfugenabstand in einen vorgegebenen Parameterbereich fällt. Der Kreuzfugenabstand sollte ebenfalls mindestens 100 mm betragen.

An dem in Transportrichtung rückwärtigen Ende der Staustrecke 6 ist eine Stranglängenmeßeinrichtung 23 zur Längenkontrolle der Lamellenstränge angeordnet. Auch die Stranglängenmeßeinrichtung 23 ist an den Rechner 14 angeschlossen. Mit den Meßwerten der Stranglängenmeßeinrichtung 23 wird das Rechenprogramm für die Berechnung nachfolgender Legebilder kalibriert. Dadurch vermeidet man, daß bei fortlaufender Fertigung der Oberlagen kleine Meßungenauigkeiten sich zu qualitätsmindernden Fehlern addieren können und stellt sicher, daß die tatsächliche Lamellenanordnung 12 mit dem Legebild auch bei fortlaufender Produktion stets übereinstimmt.

Während des Transports auf der Staustrecke 6 werden die Lamellen 3 quer gegen Anschlagleisten verdichtet und an der Leimauftragseinrichtung 8 vorbeigeführt. Nach der vollständigen Befüllung der Staustrecke 6 wird die Lamellenanordnung 12 auf Deckschichtlänge durch Querverfahren der Säge 9 getrennt. Die Einrichtungen 11 für die Querverdichtung der Lamellenstränge und für die Zuführung der Lamellenanordnung 12 zur Presse 10 weisen eine Hebevorrichtung auf. Durch die Hebevorrichtung wird die Lamellenanordnung 12 einer Pressenfolie zugeführt und dabei gleichzeitig quer verdichtet. Die Querverdichtung ist auf unterschiedliche Lamellenbreite einstellbar. Dadurch ist eine flexible Produktion mit unterschiedlichen Lamellenbreiten möglich. Zwei Lamellenanordnungen 12 mit einer der zu fertigenden Oberlage entsprechenden Länge sind nebeneinander auf der Pressenfolie positionierbar, werden der Presse 10 gemeinsam zugeführt und gemeinsam verpreßt. Die verpreßten Deckschichten verlassen die Presse 10 auf einem Folientransport. Gleichzeitig werden die nachfolgenden Lamellenanordnungen 12 in die Presse 10 eingefördert.

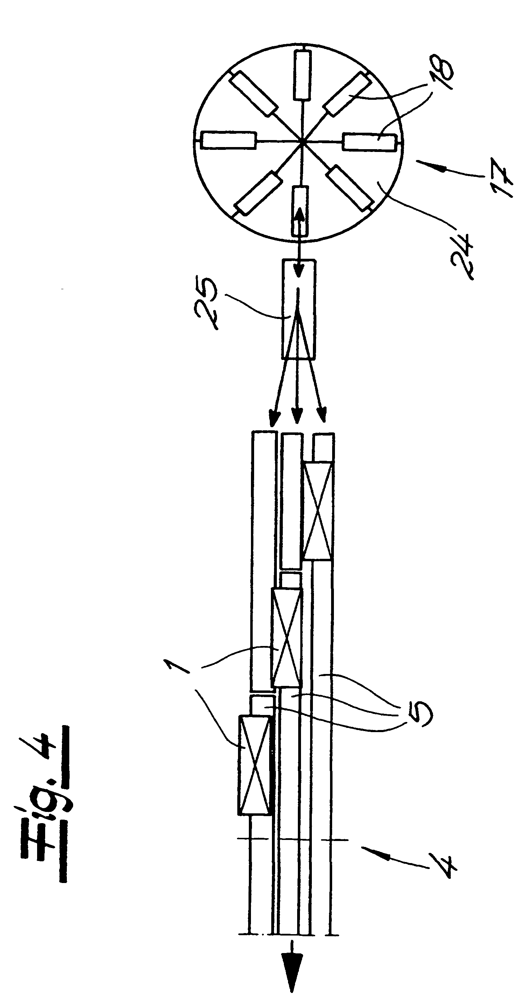

Bei der in Fig. 4 dargestellten Ausführung der erfindungsgemäßen Anlage ist die Vorrichtung 17 für die Fehllängenkorrektur in Transportrichtung vor den Lamellenmagazinen 1 am Anfang der Legestrecke 4 angeordnet. Sie weist einen NC-gesteuerten Drehteller 24 sowie eine zwischen dem Drehteller 24 und der Legestrecke 4 angeordnete Weiche 25 auf.

Die Zusatzmagazine 18 sind auf dem Drehteller 24 angeordnet und durch eine Bewegung des Drehtellers 24 in eine an die Weiche 25 anschließende Abgabestation bewegbar. Auf die Weiche 25 übergebene Ausgleichslamellen 19 sind durch Weichensteuerung den durch den Rechner 14 vorgegebenen Bahnen 5 der Legestrecke 4 zuführbar.

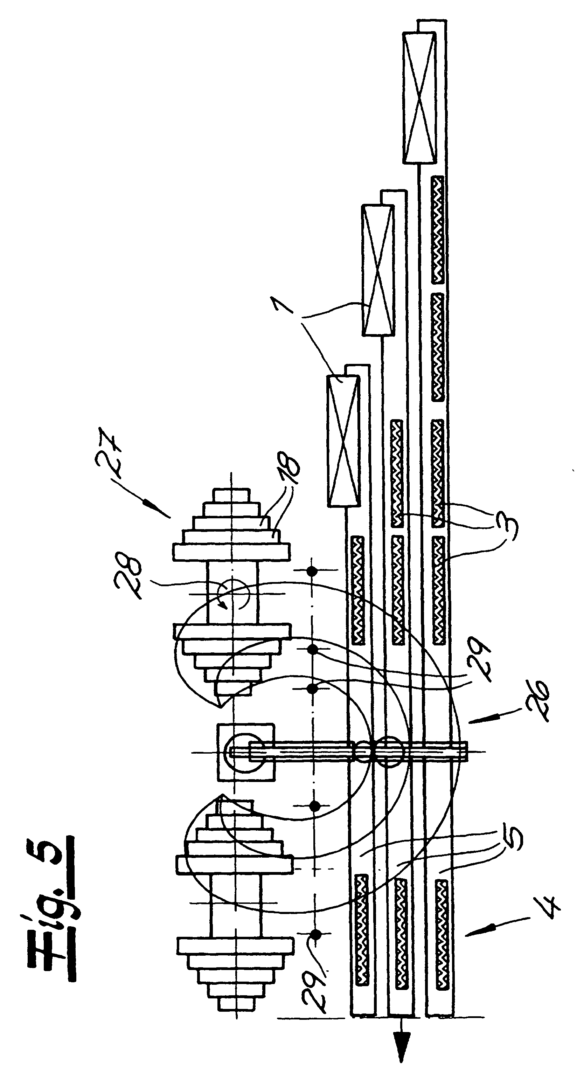

Bei der in Fig. 5 dargestellten Ausführung besteht die Vorrichtung 17 für die Fehllängenkorrektur aus einem mehrachsigen Industrieroboter 26, der Ausgleichslamellen 19 aus den Zusatzmagazinen 18 aufnimmt, die neben der Legestrecke 4 anordnet sind, und die aufgenommenen Ausgleichslamellen 19 auf den durch den Rechner 14 vorgegebenen Bahnen 5 der Legestrecke 4 ablegt. Die Zusatzmagazine 18 sind als drehbar angeordnete Doppelausgleichsmagazine 27 ausgebildet, die aus zwei an einem Drehtisch 28 angeordneten, identischen Magazinsätzen mit jeweils mehreren Zusatzmagazinen 18 bestehen. Die Magazinsätze sind wechselweise in den Arbeitsbereich des Industrieroboters 26 und in einen außerhalb des Arbeitsbereiches liegenden Bereich für die Beschickung der Zusatzmagazine 18 bewegbar. Im Ausführungsbeispiel sind zwei solcher Doppelausgleichsmagazine 27 vorgesehen. Ferner ist der Vorrichtung 17 für die Fehllängenkorrektur eine an den Rechner 14 angeschlossene Meßeinrichtung 29 für die Längenmessung der aus den Zusatzmagazinen 18 entnommenen Ausgleichslamellen 19 zugeordnet. Die Zusatzmagazine 18 werden manuell gefüllt. Nach dem Entnehmen der Ausgleichslamellen 19 aus den Zusatzmagazinen 18 werden sie um 90° gedreht, im Durchlauf längenvermessen, und dann werden sie auf den entsprechenden Bahnen 5 der Legestrecke 4 abgelegt.

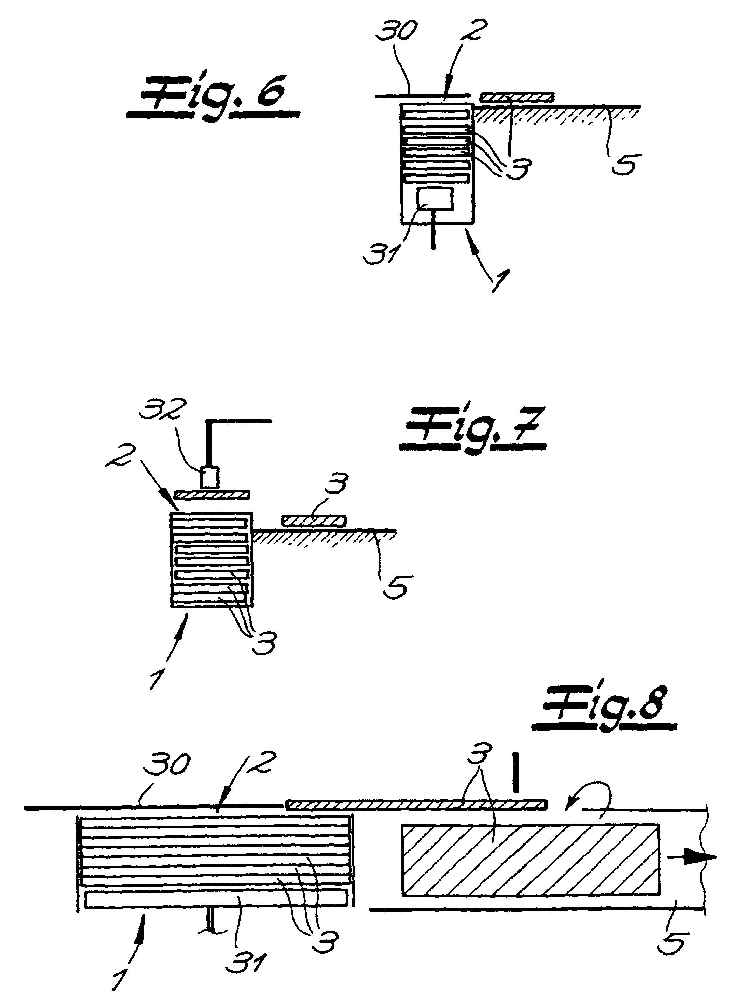

Die Lamellenmagazine 1 können unterschiedlich ausgebildet sein. Bei der in Fig. 2 dargestellten Ausführung weisen die Lamellenmagazine 1 einen vertikalen Magazinschacht, einen unterseitigen Ausschieber 30 sowie eine den Stapel 2 oberseitig beaufschlagende Druckeinrichtung 31 auf. Fig. 6 zeigt eine Ausführung des Lamellenmagazins 1 als Hubtisch. An den Hubtisch ist ein oberseitiger Ausschieber 30 angechlossen. Bei der in Fig. 7 dargestellten Ausführung weisen die Lamellenmagazine 1 einen Schacht sowie einen Sauggreifer 32 zur Entnahme der Lamellen 3 auf. Die Fig. 8 zeigt eine Ausführung, bei der die Lamellenmagazine 1 einen horizontalen Aufnahmeschacht, einen endseitigen Ausschieber 30 sowie eine den Stapel 2 beaufschlagende Druckeinrichtung 31 aufweisen, wobei das Lamellenmagazin 1 einen Stapel 2 aus hochkant nebeneinander angeordneten Lamellen 3 enthält.

## Patentansprüche

1. Anlage zur Fertigung von Oberlagen für Mehrschichten-Parkettdielen, - mit
Lamellenmagazinen (1), die jeweils einen Stapel (2) aus Lamellen (3) aufnehmen,
einer Legestrecke (4), die mindestens zwei an die Lamellenmagazine (1) anschließende parallele Bahnen (5) aufweist,
einer an die Legestrecke (4) anschließenden Staustrecke (6) mit endseitigem Anschlag (7),
einer Leimauftragseinrichtung (8) für die Beleimung der Längskanten der auf den Bahnen (5) abgelegten Lamellen (3),
einer Säge (9), die quer zu den Bahnen (5) verfahrbar ist und in einem durch die Länge der zu fertigenden Oberlagen vorgegebenen Abstand vor dem Anschlag (7) angeordnet ist,
einer beheizbaren Presse (10) und
Einrichtungen (11, 13) für die Querverdichtung der aus parallelen Lamellensträngen bestehenden Lamellenanordnung (12), für die Zuführung der Lamellenanordnung (12) zur Presse (10) und für den Abtransport der fertigverpreßten Oberlagen,
**dadurch gekennzeichnet,**
**daß** entlang der Legestrecke (4) eine Vorrichtung (17) zur Fehllängenkorrektur angeordnet ist, die Zusatzmagazine (18) für Ausgleichslamellen (19) mit in einer Abstufung vorgegebenen unterschiedlichen Lamellenlängen und eine Transfereinrichtung (20) aufweist, wobei die Transfereinrichtung (20) an alle Zusatzmagazine (18) angeschlossen ist, rechnergesteuert Ausgleichslamellen (19) aus den Zusatzmagazinen (18) entnimmt sowie einer durch den Rechner (14) vorgegebenen Bahn (5) der Legestrecke (4) zuführt, und
**daß** ein Rechner (14) mit Daten über die Längen der in den Lamellenmagazinen (1) gestapelten Lamellen (3) und mit den vorgegebenen Längen der Ausgleichslamellen (19) ein Legebild erstellt und die Lamellenentnahme aus den Lamellenmagazinen (1) sowie die Vorrichtung (17) zur Fehllängenkorrektur so steuert, daß die auf der Legestrecke (4) erzeugte Lamellenanordnung (12) dem Legebild entspricht.

2. Anlage nach Anspruch 1, **dadurch gekennzeichnet, daß** die Lamellenmagazine (1) an den Rechner (14) angeschlossene Längenmeßeinrichtungen (15) aufweisen, welche die Lamellenlängen der im Stapel (2) angeordneten Lamellen (3) messen.

3. Anlage nach Anspruch 2, **dadurch gekennzeichnet, daß** die an den Lamellenmagazinen (1) angeordneten Längenmeßeinrichtungen (15) einen Meßkopf (16) aufweisen, der sich in Stapelrichtung über einen Abschnitt des Lamellenmagazins (1) erstreckt und die Längen einer großen Zahl von Lamellen (3), vorzugsweise die Längen aller in einem Strang für das Legebild benötigten Lamellen(3), mißt.

4. Anlage nach einem der Ansprüche 1 bis 3, **dadurch gekennzeichnet, daß** an dem in Transportrichtung rückwärtigen Ende der Staustrecke (6) eine Stranglängenmeßeinrichtung (23) zur Längenkontrolle der Lamellenstränge angeordnet ist, wobei die Stränglängenmeßeinrichtung (23) an den Rechner (14) angeschlossen ist und wobei mit den Meßwerten der Stranglängenmeßeinrichtung (23) das Rechenprogramm für die Berechnung nachfolgender Legebilder kalibriert wird.

5. Anlage nach einem der Ansprüche 1 bis 4, **dadurch gekennzeichnet, daß** die Lamellenmagazine (1) einen vertikalen Magazinschacht, einen unterseitigen Ausschieber (30) sowie eine den Stapel (2) oberseitig beaufschlagende Druckeinrichtung (31) aufweisen.

6. Anlage nach einem der Ansprüche 1 bis 4, **dadurch gekennzeichnet, daß** die Lamellenmagazine (1) als Hubtisch ausgeführt sind und einen oberseitigen Ausschieber (30) aufweisen.

7. Anlage nach einem der Ansprüche 1 bis 4, **dadurch gekennzeichnet, daß** die Lamellenmagazine (1) einen Schacht sowie einen Sauggreifer (32) zur Entnahme der Lamellen (3) aufweisen.

8. Anlage nach einem der Ansprüche 1 bis 4, **dadurch gekennzeichnet, daß** die Lamellenmagazine (1) einen horizontalen Aufnahmeschacht, einen endseitigen Ausschieber (30) sowie eine den Stapel (2) beaufschlagende Druckeinrichtung (31) aufweisen, wobei das Lamellenmagazin (1) einen Stapel (2) aus hochkant nebeneinander angeordneten Lamellen (3) enthält.

9. Anlage nach einem der Ansprüche 1 bis 8, **dadurch gekennzeichnet, daß** die Vorrichtung (17) für die Fehllängenkorrektur in Transportrichtung vor den Lamellenmagazinen (1) am Anfang der Legestrecke (4) angeordnet ist und einen NC-gesteuerten Drehteller (24) sowie eine zwischen dem Drehteller (24) und der Legestrecke (4) angeordnete Weiche (25) aufweist, wobei die Zusatzmagazine (18) auf dem Drehteller (24) angeordnet und durch eine Bewegung des Drehtellers (24) in eine an die Weiche (25) anschließende Abgabestation bewegbar sind und wobei auf die Weiche (25) übergebende Ausgleichslamellen (19) durch Weichensteuerung den durch den Rechner (14) vorgegebenen Bahnen (5) zuführbar sind.

10. Anlage nach einem der Ansprüche 1 bis 8, **dadurch gekennzeichnet, daß** die Vorrichtung (17) für die Fehllängenkorrektur eine an einem Portal (21) verfahrbare Saughebeeinrichtung aufweist, welche Ausgleichslamellen (19) rechnergesteuert aus den im Fahrbereich der Saughebeeinrichtung angeordneten Zusatzmagazinen (18) aufnimmt und auf die durch den Rechner (14) vorgegebenen Bahnen (5) der Legestrecke (4) ablegt.

11. Anlage nach Anspruch 10, **dadurch gekennzeichnet, daß** der Vorrichtung (17) für die Fehllängenkorrektur eine Aufgabestation für die Beschickung der Zusatzmagazine (18) mit Ausgleichslamellen (19) zugeordnet ist, wobei die Aufgabestation eine Längenmeßeinrichtung für die aufgegebenen Ausgleichslamellen (19) aufweist und im Fahrbereich der Saughebeeinrichtung angeordnet ist und wobei die in der Aufgabestation aufgegebenen Ausgleichslamellen (19) rechnergesteuert nach Maßgabe des Längenmeßwertes mit der Saughebeeinrichtung den Zusatzmagazinen (18) zugeführt werden.

12. Anlage nach einem der Ansprüche 1 bis 8, **dadurch gekennzeichnet, daß** die Vorrichtung (17) für die Fehllängenkorrektur als mehrachsiger Industrieroboter (26) ausgeführt ist, welcher Ausgleichslamellen (19) aus den Zusatzmagazinen (18) aufnimmt, die neben der Legestrecke (4) angeordnet sind, und auf den durch den Rechner (14) vorgegebenen Bahnen (5) der Legestrecke (4) ablegt.

13. Anlage nach Anspruch 12, **dadurch gekennzeichnet, daß** die Zusatzmagazine (18) als drehbar angeordnete Doppelausgleichsmagazine (27) ausgebildet sind, die aus zwei an einen Drehtisch (28) angeordneten, identischen Magazinsätzen mit jeweils mehreren Zusatzmagazinen (18) bestehen, wobei die Magazinsätze wechselweise in den Arbeitsbereich des Industrieroboters (26) und in einen außerhalb des Arbeitsbereiches liegenden Bereich für die Beschickung der Zusatzmagazine (18) bewegbar sind.

14. Anlage nach einem der Ansprüche 1 bis 13, **dadurch gekennzeichnet, daß** der Vorrichtung (17) für die Fehllängenkorrektur eine an den Rechner (14) angeschlossene Meßeinrichtung (29) für die Längenmessung der aus den Zusatzmagazinen (18) entnommenen Ausgleichslamellen (19) zugeordnet ist.

## Claims

1. A device for producing top layers for multilayer parquet floor boards, comprising
lamella magazines (1), each of which accommodates a stack (2) of lamellae (3);
a laying area (4) which comprises at least two parallel paths (5) which follow on from the lamella magazines (1);
a bank-up distance (6) which follows on from the laying area (4), with an end stop (7);
an adhesive application device (8) for gluing the longitudinal edges of the lamellae (3) placed on the paths (5);
a saw (9) which can be moved across the paths (5) and which is arranged in front of the end stop (7) by a distance which is specified by the length of the top layers to be produced;
a heatable press (10); and
devices (11, 13) for transverse compression of the lamella arrangement (12) which comprises parallel trains of lamellae, for feeding the lamella arrangement (12) to the press (10) and for outward transport of the finished-pressed top layers;
**characterised in that**
along the laying area (4) a device (17) for incorrect length correction is arranged, which device (17) comprises supplementary magazines (18) for compensating lamellae (19) with different lamella lengths specified by gradation, and further comprises a transfer device (20), wherein the transfer device (20) is connected to all supplementary magazines (18), by means of computer control removes compensating lamellae (19) from the supplementary magazines (18), and feeds them to a path (5) of the laying area (4) which path (5) is specified by the computer (14); and
**in that** a computer (14), using data concerning the lengths of the lamellae (3) stacked in the lamella magazines (1) and with the specified lengths of the compensating lamellae (19), produces a laying pattern and controls lamella removal from the lamella magazines (1) and controls the device (17) for incorrect length correction such that the lamella arrangement (12) produced on the laying area (4) corresponds to the laying pattern.

2. The device according to claim 1, **characterised in that** the lamella magazines (1) comprise length measuring devices (15) connected to the computer (14), which length measuring devices (15) measure the lamella lengths of the lamellae (3) arranged in the stack (2).

3. The device according to claim 2, **characterised in that** the length measuring devices (15) arranged at the lamella magazines (1) comprise a measuring head (16) which in the direction of stacking extends along a section of the lamella magazine (1) and measures the lengths of a large number of lamellae (3), preferably the lengths of all lamellae (3) required in the train of lamellae to form the laying pattern.

4. The device according to any one of claims 1 to 3, **characterised in that** at the end of the bank-up distance (6), which end is at the rear when seen in the direction of transport, a lamella train measuring device (23) for checking the length of the trains of lamellae is arranged, wherein the lamella train measuring device (23) is connected to the computer (14) and wherein the measured values of the lamella train measuring device (23) are used to calibrate the computer program for calculating subsequent laying patterns.

5. The device according to any one of claims 1 to 4, **characterised in that** the lamella magazines (1) comprise a vertical magazine well, a push-type ejector (30) arranged at the bottom, as well as a pressure device (31) which acts upon the stack (2) from the top.

6. The device according to any one of claims 1 to 4, **characterised in that** the lamella magazines (1) are designed in the form of an elevating table and comprise a push-type ejector (30) at the top.

7. The device according to any one of claims 1 to 4, **characterised in that** the lamella magazines (1) comprise a well and a suction-type gripper (32) for removing the lamellae (3).

8. The device according to any one of claims 1 to 4, **characterised in that** the lamella magazines (1) comprise a horizontal accommodation well, a push-type ejector (30) at the end, as well as a pressure device (31) which acts on the stack (2), wherein the lamella magazine (1) comprises a stack (2) made of lamellae (3) arranged on edge, side-by-side.

9. The device according to any one of claims 1 to 8, **characterised in that** the device (17) for incorrect length correction is arranged in front of the lamella magazines (1) when seen in the direction of transport, at the beginning of the laying area (4), and comprises an NC-controlled rotary table (24) as well as a distributing guide (25) which is arranged between the rotary table (24) and the laying area (4), wherein the supplementary magazines (18) are arranged on the rotary table (24) and by movement of the rotary table (24) can be moved into a delivery station which follows on from the distributing guide (25), and wherein compensating lamellae (19) to be conveyed to the distributing guide (25) can be conveyed by controlling the distributing guide (25) to the paths (5) specified by the computer (14).

10. The device according to any one of claims 1 to 8, **characterised in that** the device (17) for incorrect length correction comprises a suction lifting device which can be moved along a portal (21) and which by computer control picks up compensating lamellae (19) from the supplementary magazines (18) which are arranged within the range of travel of the suction lifting device, and wherein said suction lifting device places said compensating lamellae (19) onto the paths (5) of the laying area (4), which paths (5) have been specified by the computer (14).

11. The device according to claim 10, **characterised in that** a feeding station for feeding the compensating lamellae (19) to the supplementary magazines (18) is associated with the device (17) for incorrect length correction, wherein the feeding station comprises a length measuring device for the fed-in compensating lamellae (19) and is arranged within the area of travel of the suction lifting device, and wherein the compensating lamellae (19) fed to the feeding station are conveyed to the supplementary magazines (18) by means of the suction lifting device by computer control according to their measured length value.

12. The device according to any one of claims 1 to 8, **characterised in that** the device (17) for incorrect length correction is a multi-axis industrial robot (26) which picks up compensating lamellae (19) from the supplementary magazines (18) which are arranged beside the laying area (4), and places them on the paths (5) of the laying area (4), which paths (5) have been prescribed by the computer (14).

13. The device according to claim 12, **characterised in that** the supplementary magazines (18) are rotatably arranged double compensation magazines (27), wherein said supplementary magazines (18) comprise two identical magazine sets, arranged on a rotary table (28), each set comprising several supplementary magazines (18), wherein the magazine sets can alternately be moved into the working region of the industrial robot (26) and into a region for feeding the supplementary magazines (18), which region is situated outside the working region.

14. The device according to any one of claims 1 to 13, **characterised in that** associated with the device (17) for incorrect length correction is a measuring device (29) for measuring the length of the compensating lamellae (19) removed from the supplementary magazines (18), wherein said measuring device (29) is connected to the computer (14).

## Revendications

1. Installation pour fabriquer des couches supérieures de planches de parquet à plusieurs couches, comportant:
des chargeurs de lamelles (1), qui renferment respectivement une pile (2) de lamelles (3),
une section d'étalement (4), qui présente au moins deux voies (5) parallèles, contiguës aux chargeurs de lamelles (1)
une section de blocage (6) contiguë à la section d'étalement (4) comportant une butée (7) d'extrémité,
un dispositif d'application de colle forte (8) pour l'encollage des arêtes longitudinales des lamelles (3) étendues sur les voies (5),
une scie (9), qui se déplace en diagonale par rapport aux voies (5) et est disposée à une distance sélectionnée des longueurs des couches supérieures à fabriquer avant la butée (7),
une presse chauffante (10) et
des dispositifs (11,13) pour le compactage de l'assemblage de lamelles (12) constitué de longueurs de lamelles parallèles, pour l'introduction de l'assemblage de lamelle (12) dans la presse (10) et pour l'évacuation des couches supérieures pressées,
**caractérisée en ce que**,
le long de la section d'étalement (4), un dispositif (17) de correction des longueurs erronées est disposé, qui présente des chargeurs d'appoint (18) de lamelles d'égalisation (19) comportant des longueurs de lamelles différentes organisées en une hiérarchie sélectionnée et un dispositif de transfert (20), dans lequel le dispositif de transfert (20) est connecté à tous les chargeurs d'appoint (18), retire des chargeurs d'appoint (20) des lamelles d'égalisation (19) par commande informatique et les introduit sur une voie (5) sélectionnée par l'ordinateur (14) de la section d'étalement (4), et
un ordinateur (14) possédant des données relatives aux longueurs des lamelles (3) empilées dans les chargeurs de lamelles (1) et aux longueurs sélectionnées des lamelles d'égalisation (19) produit une image de chargement et commande le retrait des lamelles des chargeurs de lamelles (1) ainsi que le dispositif (17) de correction des longueurs erronées de telle sorte que l'assemblage de lamelles (12) produit sur la section d'étalement (4) corresponde à l'image de chargement.

2. Installation selon la revendication 1, **caractérisée en ce que** les chargeurs de lamelles (1) présentent des dispositifs de mesure de longueurs (15) connectés à l'ordinateur (14), lesquels mesurent les longueurs des lamelles (3) disposées dans la pile (2).

3. Installation selon la revendication 2, **caractérisée en ce que** les dispositifs de mesure de longueurs (15) disposés sur les chargeurs de lamelles (1) présentent une tête de mesure (16), qui s'étend dans la direction d'empilement sur une section du chargeur de lamelle (1) et mesure les longueurs d'un grand nombre de lamelles (3), de préférence les longueurs de toutes les lamelles (3) dans une ligne nécessaires pour l'image de chargement.

4. Installation selon une des revendications 1 à 3, **caractérisée en ce qu'**un dispositif de mesure des longueurs dans la ligne (23) pour contrôler les longueurs de la ligne de lamelles est disposé à l'extrémité arrière de la section de blocage (6) dans la direction de transport, moyennant quoi le dispositif de mesure des longueurs dans la ligne (23) est connecté à l'ordinateur (14) et le programme informatique pour calculer l'image de chargement suivante est calibré par les valeurs mesurées par le dispositif de mesure des longueurs dans la ligne (23).

5. Installation selon une des revendications 1 à 4, **caractérisé en ce que** les chargeurs de lamelles (1) présentent un compartiment de chargeur vertical, un dispositif d'extraction (30) disposé en bas ainsi qu'un dispositif de pression (31) sollicitant la pile par le haut.

6. Installation selon une des revendications 1 à 4, **caractérisée en ce que** les chargeurs de lamelles (1) sont réalisés comme des tables de levage et présentent un dispositif d'extraction (30) disposé en haut.

7. Installation selon une des revendications 1 à 4, **caractérisée en ce que** les chargeurs de lamelles (1) présentent un compartiment ainsi qu'une ventouse (32) pour retirer les lamelles (3).

8. Installation selon une des revendications 1 à 4, **caractérisée en ce que** les chargeurs de lamelles (1) présentent un compartiment de contention horizontal, un dispositif d'extraction (30) disposé à l'extrémité ainsi qu'un dispositif de pression (31) sollicitant la pile (2), moyennant quoi le chargeur de lamelles (1) contient une pile (2) de lamelles (3) disposées les unes à côté des autres de chant.

9. Installation selon une des revendications 1 à 8, **caractérisée en ce que** le dispositif (17) de correction des longueurs erronées est disposé dans la direction de transport avant les chargeurs de lamelles (1) au début de la section d'étalement (4) et présente un plateau tournant (24) commandé numériquement ainsi qu'un aiguillage (25) disposé entre le plateau tournant (24) et la section d'étalement (4), moyennant quoi les chargeurs d'appoint (18) sont disposés sur le plateau tournant (24) et déplacés par un mouvement du plateau tournant (24) vers un poste de déchargement contigu à l'aiguillage (25) et moyennant quoi les lamelles d'égalisation (19) qui passent par l'aiguillage (25) sont introduites par commande d'aiguillage sur les voies (5) sélectionnées par l'ordinateur (14).

10. Installation selon une des revendications 1 à 8, **caractérisée en ce que** le dispositif (17) de correction des longueurs erronées présente un dispositif à ventouse déplaçable sur un portique (21), lequel prélève par commande informatique des lamelles d'égalisation (19) des chargeurs d'appoint (18) disposés dans la zone de déplacement du dispositif à ventouse et les dépose sur les voies (5) de la section d'étalement (4) sélectionnées par l'ordinateur (14).

11. Installation selon la revendication 10, **caractérisée en ce qu'**un poste de chargement des chargeurs d'appoint (18) en lamelles d'égalisation (19) est coordonné au dispositif (17) de correction des longueurs erronées, moyennant quoi le poste de chargement présente un dispositif de mesure des longueurs des lamelles d'égalisation (19) chargées et est disposé dans la zone de déplacement du dispositif à ventouse et moyennant quoi les lamelles d'égalisation (19) chargées dans le poste de chargement sont introduites par commande informatique dans les chargeurs d'appoint (18) par le dispositif à ventouse, en fonction de la valeur de la longueur mesurée.

12. Installation selon une des revendications 1 à 8, **caractérisé en ce que** le dispositif (17) de correction des longueurs erronées est configuré comme un robot industriel (26) à plusieurs axes, lequel prélève des lamelles d'égalisation (19) des chargeurs d'appoint (18), qui sont disposés à côté de la section d'étalement (4) et les dépose sur les voies (5) de la section d'étalement (4) sélectionnées par l'ordinateur (14).

13. Installation selon la revendication 12, **caractérisée en ce que** les chargeurs d'appoint (18) sont configurés comme des chargeurs d'égalisation doubles (27) disposés de manière tournante, qui sont constitués de deux parties de chargeur identiques, disposées sur une table tournante (28), comportant respectivement plusieurs chargeurs d'appoint (18), moyennant quoi les parties de chargeur sont déplaçables en alternance dans la zone de travail du robot industriel (26) et dans une zone située à l'extérieur de la zone de travail pour le chargement des chargeurs d'appoint (18).

14. Installation selon une des revendications 1 à 13, **caractérisée en ce que** un dispositif de mesure (29) connecté à l'ordinateur (14) pour mesurer les longueurs des lamelles d'égalisation (19) retirées des chargeurs d'appoint (18) est coordonné au dispositif (17) de correction des longueurs erronées.
